(19) Europäisches Patentamt
European Patent Office
Office européen des brevets

(11) **EP 4 343 703 B1**

(12) **EUROPÄISCHE PATENTSCHRIFT**

(45) Veröffentlichungstag und Bekanntmachung des Hinweises auf die Patenterteilung:
**11.02.2026   Patentblatt 2026/07**

(21) Anmeldenummer: **22197773.9**

(22) Anmeldetag: **26.09.2022**

(51) Internationale Patentklassifikation (IPC):
*G06T 11/00* (2026.01)

(52) Gemeinsame Patentklassifikation (CPC):
**G06T 12/10;** G06T 2211/408; G06T 2211/448

(54) **VERFAHREN UND SYSTEM ZUR VORVERARBEITUNG VON CT-AUFNAHMEN**

METHOD AND SYSTEM FOR PRE-PROCESSING CT IMAGES

PROCÉDÉ ET SYSTÈME DE PRÉTRAITEMENT D'ENREGISTREMENTS CT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.03.2024   Patentblatt 2024/13**

(73) Patentinhaber: **Siemens Healthineers AG 91301 Forchheim (DE)**

(72) Erfinder: **Dr. Raupach, Rainer 91336 Heroldsbach (DE)**

(74) Vertreter: **Siemens Healthineers Patent Attorneys Postfach 22 16 34 80506 München (DE)**

(56) Entgegenhaltungen:
US-A1- 2021 012 463

• ANONYMOUS: "Transformation matrix - Wikipedia, the free encyclopedia", 22 February 2015 (2015-02-22), XP055171429, Retrieved from the Internet <URL:http://en.wikipedia.org/wiki/Transformation_matrix> [retrieved on 20150223]

**Beschreibung**

Die Erfindung betrifft ein Verfahren und ein System zur Vorverarbeitung einer Mehrzahl von simultan aufgenommenen CT-Aufnahmen bei unterschiedlichen Aufnahme-Energien (CT: Computertomographie). Insbesondere betrifft die Erfindung eine Strahlaufhärtungs-Korrektur für spektrale CT-Aufnahmen mit Rauschbeschränkung.

Bei CT-Systemen mit der Möglichkeit einer simultanen Aufnahme von mehreren Spektren, besteht die Möglichkeit Bild-Datensätze zu rekonstruieren, die selbst eine Materialeigenschaft darstellen (z.B. die räumliche Verteilung von Basismaterialien) oder die Schwächungskoeffizienten bei einer vorgegebenen Energie darstellen, die nicht notwendigerweise den bei der Messung verwendeten Energien entsprechen. Idealerweise sind diese Darstellung frei von Artefakten, die durch Strahlaufhärtung verursacht werden, was jedoch in der Realität häufig nicht der Fall ist.

Die Problematik ist insbesondere für CT-Systeme mit quantenzählenden Detektoren relevant, jedoch auch für jedes andere Mehrspektren-CT-Prinzip, z.B. Dual Source CT, Sandwich-Detektor, Fast-kVp-Switching oder andere.

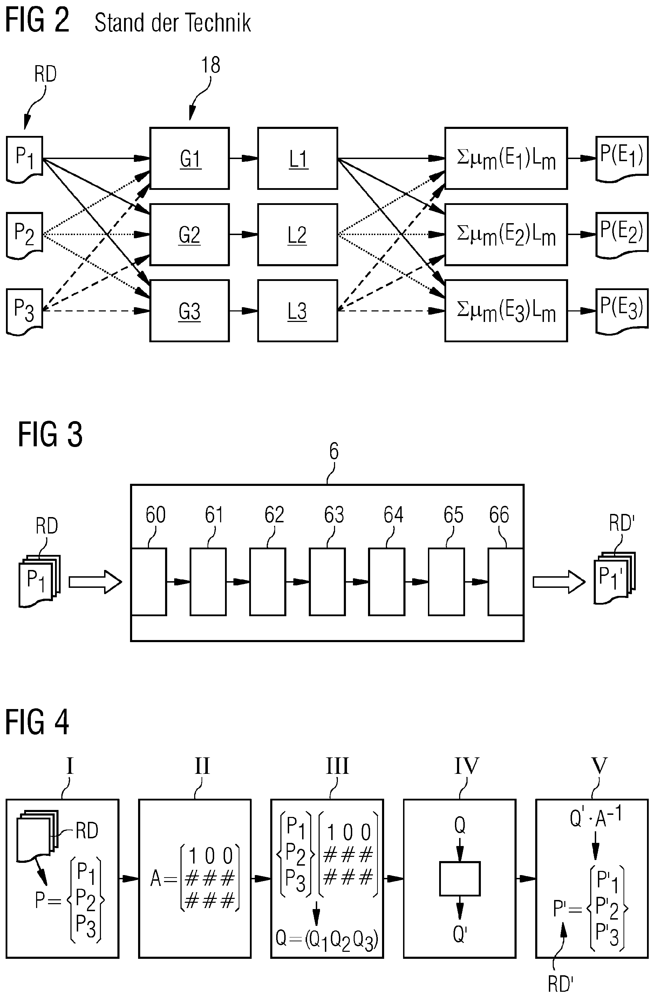

Im Stand der Technik ist bekannt, dass aus N Spektren Materialkomponenten rekonstruiert werden können, sofern diese aufgrund ihrer unterschiedlichen spektralen Abhängigkeit des Schwächungskoeffizienten unterscheidbar sind (s. Figur 2). Es kann dabei eine exakte Basismaterialzerlegung erreicht werden, jedoch tritt dabei eine Rauschverstärkung auf, insbesondere wenn große Anteile von nicht-wasserähnlichen Materialien vorhanden sind. In der klinischen CT betrifft dies Knochen, Metalle oder eine hohe Anreichung von Kontrastmitteln.

US 2021/0012463 A1 offenbart ein Verfahren gemäß des Oberbegriffs des Anspruchs 1.

Es ist eine Aufgabe der vorliegenden Erfindung, ein alternatives, komfortableres Verfahren und ein entsprechendes System zur Vorverarbeitung einer Mehrzahl von simultan aufgenommenen CT-Aufnahmen bei unterschiedlichen Aufnahme-Energien anzugeben, mit dem die oben beschriebenen Nachteile vermieden werden und insbesondere eine Verringerung des Rauschens erreicht werden kann.

Diese Aufgabe wird durch ein Verfahren gemäß Patentanspruch 1, ein System gemäß Patentanspruch 7 sowie durch ein Computerprogrammprodukt gemäß Patentanspruch 10 und ein Speichermedium gemäß Patentanspruch 11 gelöst.

Das erfindungsgemäße Verfahren dient zur Vorverarbeitung, insbesondere zur Rauschunterdrückung, einer Mehrzahl von simultan aufgenommenen CT-Aufnahmen mit Rohdaten, die bei unterschiedlichen Aufnahme-Energien aufgenommen worden sind. Diese CT-Aufnahmen also bei unterschiedlichen Energien aufgenommen, wobei z.B. ein energieselektiver Detektor, welcher eine Unterscheidung in mehrere Energie-Kanäle erlaubt, und eine breitbandige Röntgenquelle verwendet werden könnte oder auch ein nicht-energieselektiver Detektor in Kombination mit mehreren, ggf. schmalbandigeren, und sich hinsichtlich des emittierten Spektrums unterscheidenden Röntgenquellen. Die Aufnahmen umfassen also Mehrenergie-CT-Rohdaten $P_i(k)$ eines Objekts, z.B. eines Patienten, die in N spektralen Kanälen aufgenommen worden sind, wobei i = 1, ... N. Dabei beschreibt k vereinfacht dargestellt alle vorhandenen Freiheitsgrade der Rohdaten, also z.B. Projektionswinkel, Kanalnummer, Detektorzeile. Es liegen also Rohdaten von mindestens zwei CT-Aufnahmen vor, die bei unterschiedlichen Energien aufgenommen worden sind. Die Mehrzahl an CT-Aufnahmen bei unterschiedlichen (Aufnahme- )Energien kann auch als spektraler CT-Datensatz bezeichnet werden, wobei die jeweiligen CT-Aufnahmen des Datensatzes sich unterscheidenden Röntgenenergieverteilungen zugeordnet werden können. Wie bereits zuvor ausgeführt kann dies einer Aufnahme unter Verwendung von N unterschiedlichen Röntgenspektren entsprechen oder die Aufnahme mittels eines energieselektiven Detektors, welcher eine spektrale Unterscheidung der Rohdaten in N Kanälen, d.h. Spektren, erlaubt.

Das Verfahren umfasst die Schritte des Patentanspruchs 1.

Die Komponenten $P_i$ des Vektors P sind die Rohdaten der CT-Aufnahmen bei jeweils einer Energie pro Vektorkomponente. Im Grunde entspricht dieser Vektor damit den Rohdaten, wobei er diesen Rohdaten quasi eine Reihenfolge zuweist bzw. eine starre Zuordnung, die angibt, welche Rohdaten (also bei welcher Energie, d.h. in welchem spektralen Kanal, aufgenommen) für welche nachfolgende Berechnung verwendet wird. Beispielsweise kann eine bestimmte Anordnung der Rohdaten, **z.B.** in ansteigender oder abfallender Aufnahme-Energie, bereits den Vektor P darstellen. Im Grunde könnte hier weiter von den Rohdaten gesprochen werden, aber mit dem Vektor sind die weiteren Schritte besser verständlich. Bevorzugt sind die aufgenommenen Spektren (also die Rohdaten bei den unterschiedlichen Energien) so indiziert, dass $P_1$ das Spektrum mit dem geringsten Rauschen bezeichnet. Das heißt, dass $P_1$ die Rohdaten in demjenigen spektralen Kanal bezeichnet, welche das geringste Rauschen aufweisen. Das können **z.B.** im Falle eines quantenzählenden Detektors, die Rohdaten sein, welcher der niedrigsten Energieschwelle zugeordnet sind.

Die Dimension des Vektors ist N, was einer Anzahl der aufgenommenen Energien entspricht. Dies bedeutet, dass nicht zwingend alle Rohdaten von allen Energien verwendet werden müssen. Es ist zwar bevorzugt, dass bei N aufgenommenen Energien auch ein Vektor mit N Komponenten gebildet wird. Es kann aber auch von Vorteil sein, N+1 Energien aufzunehmen, einen Vektor mit N Komponenten zu bilden und einen Satz von Rohdaten bei einer Energie, der nicht in den Vektor aufgenommen worden ist, als Vergleichswert zu verwenden.

Die Matrix A kann vorher bereits vorliegen (z.B. als Standardmatrix, oder basierend auf Daten zur Untersuchung (individuelle Matrix A für jeweils unterschiedliche Art der Untersuchung) oder zum Patienten (Matrix A wird basierend auf den Patientendaten angepasst) bestimmt werden. Wenn die erste Vektorkomponente $P_1$ das geringste Rauschen aufweist (bzw. bei der niedrigsten Energie aufgenommen wurde), hat A bevorzugt die Form:

$$A = \begin{pmatrix} 1 & 0 & \cdots & 0 \\ \# & \# & \cdots & \# \\ \vdots & \vdots & \ddots & \vdots \\ \# & \# & \cdots & \# \end{pmatrix}$$

mit den frei wählbaren Einträgen "#", wobei eine andere Matrix als die Identität bevorzugt ist. Ein Beispiel für N = 2, also zwei Energien wäre $A = \begin{pmatrix} 1 & 0 \\ 1 & -1 \end{pmatrix}$ .

Die Matrix A hat die Dimension N x M, was bedeutet, dass sie N Spalten und M Zeilen hat und die Multiplikation mit dem N-dimensionalen Vektor P einen M-dimensionalen Vektor Q zum Resultat hat. Auch wenn P und Q bevorzugt dieselbe Dimension N haben sollten, gibt es auch sinnvolle Anwendungsfälle für einen M-dimensionalen transformierten Vektor Q (und sogar eine andere Dimension O für den rück-transformierten Vektor P'), nämlich insbesondere wenn das System der aufgenommenen Spektren im Hinblick auf die spätere Anzahl der Basismaterialen überbestimmt ist. Dann muss insbesondere keine inverse Matrix $A^{-1}$ existieren. Es ist diesbezüglich auch bevorzugt, die Reduktion von Spektren vor der Transformation des Vektors P zu Q durchzuführen und dann wieder mit einer quadratischen Matrix A zu arbeiten. Es ist somit bevorzugt, dass der transformierte Vektor Q ebenfalls die Dimension N hat (also M = N) und dass die Matrix A eine N x N Matrix ist.

Die Matrix A ist bevorzugt invertierbar, d.h. ihre Determinante ist ungleich Null, und hat besonders bevorzugt in N-1 Zeilen die Zeilensummen Null.

Der transformierte Vektor Q wird durch eine einfache Multiplikation des Vektors P mit der Matrix A berechnet. Hat die Matrix A in einer Zeile mehr als einen Eintrag ungleich Null, so sind Komponenten $Q_i$ von Q Mischterme von zwei oder mehreren $P_i$. Diese Rechnung ist im Stand der Technik bekannt und folgt für die $Q_i$ aus den Matrixindizes $A_{in}$ und den Vektorkomponenten (Rohdaten) $P_i$ mit i= [0, ... , M] der Formel

$$Q_i = \sum_{n=1}^{N} A_{in} P_n \ .$$

Es werden also M (bevorzugt mit M = N) neue Projektionsdatensätze $Q_i$ durch eine Transformation mit der N x M Matrix A erzeugt. Danach folgt eine Bearbeitung der Projektionsdaten.

Auch im Stand der Technik kann eine Vorverarbeitung von Daten stattfinden, z.B. eine Entrauschung. Dabei werden die Rohdaten vorverarbeitet (z.B. entrauscht), was hier den $P_i$ entsprechen würde.

Im Unterschied dazu werden im Zuge des erfindungsgemäßen Verfahrens die Komponenten (die Daten) des transformierten Vektors Q (also die $Q_i$) bearbeitet. Dies geschieht mit der Bearbeitungsfunktion B, die z.B. eine Funktion zur Entrauschung sein kann. Auch wenn eine Entrauschung in der Praxis eine bevorzugte Bearbeitung ist, kann zusätzlich oder alternativ auch eine Anzahl weiterer Vorverarbeitungsschritte stattfinden, z.B. eine Korrektur von Artefakten oder eine andere Verbesserung der Datenqualität im objektiven Sinn. Es sollten an dieser Stelle jedoch keine "willkürlichen" Veränderungen wie z.B. eine Kontrastverstärkung vorgenommen werden. Mit "willkürlich" sind dabei Veränderungen gemeint, die die physikalische Aussagekraft der Daten im Sinne der später durchgeführten Materialzerlegung beinträchtigen. Eine Kontrastverstärkung wäre beispielsweise eine visuelle Verbesserung, die aber die Daten qualitativ verändert.

Besonders bevorzugt ist hier, dass ein Wert der Rohdaten (bei einer Energie) unverändert bleibt, z.B. wenn die Matrixmultiplikation an dieser Stelle die Identität der Komponente $P_i$ als $Q_j$ ergab oder wenn dieser Wert zusätzlich verwendet wird. Dieser Wert kann als Vergleichswert verwendet werden, insbesondere zur Rauschreduktion.

Eine bevorzugte Bearbeitung ist eine strukturerhaltende Rauschreduktion (oft mit "$\Lambda$" bezeichnet), in den Projektionsdaten Q, wobei eine geometrische Synchronisation stattfindet. Beispielsweise könnten unter der Annahme, dass gemäß einer vorteilhaften Wahl für den Vektor P (z.B. erste Komponente mit geringstem Rauschen) und die Matrix A (z.B. so dass $Q_1 = P_1$) die Daten des ersten Spektrums die beste Statistik aufweisen, diese als Guide bzw. Prior verwendet werden. Solche Verfahren sind aus der Literatur bekannt.

Der bearbeitete Vektor Q wird dann als "Q'" bezeichnet und ergibt sich aus der Bearbeitungsfunktion B mit Q' = B(Q). Bei einer strukturerhaltenden Rauschreduktion kann B = A sein und Q' = $\Lambda$(Q).

Nach der Bearbeitung wird der bearbeitete transformierte Vektor Q' mit der Matrix Z multipliziert und damit der rücktransformierte Vektor P' = Z · Q' berechnet. Diese Matrix Z hat für den M-dimensionalen Vektor Q M Zeilen und O Spalten, wobei in dem bevorzugten Falle, dass die Dimension von P' gleich der Dimension des Vektors P sein soll, O = N gilt. Die Matrix Z ist bevorzugt die inverse Matrix von A (Z = $A^{-1}$), muss dies jedoch nicht zwingend sein Sie kann z.B. auch eine M x N Matrix sein, zumindest wenn Q eine andere Dimension M hat wie der Vektor P. Z kann aber auch eine N x N Matrix sein, die nicht die Inverse von A ist. Diese Rechnung ist im Stand der Technik bekannt und folgt für die $P'_i$ aus den Matrixindizes $Z_{im}$ und den Vektorkomponenten $Q'_m$ der Formel

$$P'_i = \sum_{m=1}^{M} Z_{im} Q'_m = \sum_{m=1}^{M} Z_{im} B(Q)_m \; .$$

Der rücktransformierte Vektor P' wird dann ausgegeben, um weitere Berechnungen durchzuführen. Die Komponenten des rück-transformierten Vektors P' entsprechen dabei wieder Rohdaten, die jedoch durch die vorangehenden Bearbeitungsschritte vorverarbeitet wurden, z.B. rauschreduziert. Diese können nun für eine Rekonstruktion von Bildern bzw. eine Rekonstruktion von Materialkomponenten verwendet werden, wie im einleitenden Teil beschrieben.

Das erfindungsgemäße System zur Vorverarbeitung einer Mehrzahl von simultan aufgenommenen CT-Aufnahmen mit Rohdaten, die bei unterschiedlichen Aufnahme-Energien aufgenommen worden sind, ist durch Patentanspruch 7 definiert.

Eine erfindungsgemäße Steuereinrichtung zur Steuerung eines Computertomographiesystems umfasst ein erfindungsgemäßes System und ist damit auch zur Durchführung des erfindungsgemäßen Verfahrens ausgelegt.

Ein erfindungsgemäßes Computertomographiesystem umfasst eine erfindungsgemäße Steuereinrichtung.

Ein Großteil der zuvor genannten Komponenten des Systems, können ganz oder teilweise in Form von Softwaremodulen in einem Prozessor eines entsprechenden Rechensystems realisiert werden, z.B. von einer Steuereinrichtung eines Computertomographie-Systems. Eine weitgehend softwaremäßige Realisierung hat den Vorteil, dass auch schon bisher verwendete Rechensysteme auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in ein Rechensystem ladbar ist, mit Programmabschnitten, um die Schritte des erfindungsgemäßen Verfahrens auszuführen, wenn das Programm in dem Rechensystem ausgeführt wird. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen. Zum Transport zum Rechensystem bzw. zur Steuereinrichtung und/oder zur Speicherung an oder in dem Rechensystem bzw. der Steuereinrichtung kann ein computerlesbares Medium, z.B. ein Memorystick, eine Festplatte oder ein sonstiger transportabler oder fest eingebauter Datenträger dienen, auf welchem die von einem Rechensystem einlesbaren und ausführbaren Programmabschnitte des Computerprogramms gespeichert sind. Das Rechensystem kann z.B. hierzu einen oder mehrere zusammenarbeitende Mikroprozessoren oder dergleichen aufweisen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Gemäß einem bevorzugten Verfahren wird der rücktransformierte Vektor P' in einem nachfolgenden Schritt zur Ermittlung von Ergebnissen aus den Rohdaten verwendet, bevorzugt zur Ermittlung von

- Basismaterial-Daten und/oder
- monochromatischen Daten und/oder
- Elektronendichte und/oder
- Kernladung und/oder
- Anteilen von Absorptionseffekten, insbesondere Compton-Effekt oder photoelektrischer Effekt.

All diese Berechnungen sind im Stand der Technik bekannt, können nach Anwendung des erfindungsgemäßen Verfahrens jedoch mit deutlich verbesserten (vorverarbeiteten) Rohdaten durchgeführt werden. Damit können die Ergebnisse optimiert werden.

Gemäß einem bevorzugten Verfahren ist die Bearbeitung der Komponenten des transformierten Vektors Q ein Entrauschen. Die Bearbeitungsfunktion B bewirkt also ein Entrauschen der Komponenten des transformierten Vektors Q. Es ist dabei bevorzugt, dass eine strukturerhaltene Rauschreduktion durchgeführt wird, bei der eine Komponente des transformierten Vektors, insbesondere die erste Komponente, als Führungsinstanz für eine geometrische Synchronisation verwendet wird. Unter der Annahme, dass gemäß der speziellen, vorteilhaften Wahl die Daten des ersten Spektrums die beste Statistik aufweisen, können diese als Guide bzw. Prior verwendet werden.

Gemäß einem bevorzugten Verfahren werden vor der Bearbeitung der Komponenten des transformierten Vektors Q aus dessen Komponenten $Q_i$ CT-Bilder rekonstruiert. Diese CT-Bilder werden dann mit der Bearbeitungsfunktion B bearbeitet und die bearbeiteten CT-Bilder bevorzugt wieder zu Rohdaten rück-rekonstruiert. Es findet also eine Entrauschung der Projektionsdatensätze $Q_i$ im Bildraum statt. Nach der Bearbeitung werden die entrauschten Bilder wieder durch eine Vorwärtsprojektion, die die Rekonstruktion invertiert, wieder in den Projektionsdatenraum überführt. Der Vorteil der Rauschreduktion im Bildraum ist, dass das Signal-zu-Rauschverhältnis von relevanten Strukturen in der Regel im Bildraum größer ist als in den Projektionsdaten. Auch in dieser Variante kann eine strukturerhaltende Entrauschung stattfinden.

Wegen der Linearität von CT-Rekonstruktion, Vorwärtsprojektion und der Transformation A lässt sich die Reihenfolge in vielen Varianten vertauschen, und auch asymmetrisch anordnen, in dem Sinn, dass z.B. A im Bildraum und Z (z.B. $A^{-1}$) im Rohdatenraum angewendet wird.

Gemäß einem bevorzugten Verfahren erfolgt die Rekonstruktion von CT-Bildern vor der Bildung des transformierten Vektors Q und die Rück-Rekonstruktion der CT-Bilder nach der Bildung des rücktransformierten Vektors P'.

Gemäß einem bevorzugten Verfahren erfolgt die Rekonstruktion von CT-Bildern nach der Bildung des transformierten Vektors Q und die Rück-Rekonstruktion der CT-Bilder nach der Bildung des rücktransformierten Vektors P'.

Gemäß einem bevorzugten Verfahren erfolgt die Rekonstruktion von CT-Bildern nach der Bildung des transformierten Vektors Q und die Rück-Rekonstruktion der CT-Bilder vor der Bildung des rücktransformierten Vektors P'.

Gemäß einem bevorzugten Verfahren erfolgt die Rekonstruktion von CT-Bildern vor der Bildung des transformierten Vektors Q und die Rück-Rekonstruktion der CT-Bilder vor der Bildung des rücktransformierten Vektors P'.

Gemäß einem bevorzugten Verfahren wird eine Komponente des Vektors P als Vergleichswert für die Bearbeitung ausgewählt, insbesondere die erste Komponente, bzw. eine Komponente, die bei einer vorgegebenen Energie aufgenommen worden ist (und damit nach Vorüberlegungen den geringsten Rauschanteil aufweisen sollte). Die Matrix A wird dabei so bestimmt, dass in der Zeile, die bei der Transformation auf diese Komponente wirkt, der Matrixkoeffizient auf der Hauptdiagonalen den Wert 1 hat und alle anderen Matrixkoeffizienten der Zeile den Wert 0 haben. Damit wird dieser Vergleichswert $P_i$ auf einen Projektionsdatensatz $Q_i = P_i$ abgebildet. Bevorzugt sind die Spektren dabei so indiziert, dass das Spektrum mit dem geringsten Rauschen, also z.B. im Falle eines quantenzählenden Detektors die Rohdaten, welche der niedrigsten Energieschwelle zugeordnet sind, die erste Vektorkomponente von P bildet (also $P_1$).

Gemäß einem bevorzugten Verfahren wird eine Aufnahme mit N+1 Energien durchgeführt und eine Aufnahme bei einer dieser Energien als Vergleichsaufnahme ausgewählt. Aus den übrigen Aufnahmen wird bei N Energien der Vektor P gebildet und die Vergleichsaufnahme dient nach Bilden des Vektors $Q = A \cdot P$ als Vergleichswert für die Bearbeitung. Dies entspricht vom Prinzip her der vorangehend beschriebenen Vorgehensweise, bei der $Q_i = P_i$ den Vergleichswert bildet, mit dem formalen Unterschied, dass für den Vergleichswert keine Matrixmultiplikation erfolgte, dieser also quasi als "zusätzlicher" Wert vorliegt.

Gemäß einem bevorzugten Verfahren ist die Matrix A invertierbar und der rücktransformierte Vektor $P' = A^{-1} \cdot Q'$ wird aus der inversen Matrix von A als Matrix Z (also $Z = A^{-1}$) und dem bearbeiteten transformierten Vektor $Q' = B(Q)$ gebildet.

Gemäß des Verfahrens hat Matrix A in N-1 Zeilen die Zeilensummen von 0. Für die Matrix Z ist bevorzugt, dass Z in N-1 Spalten die Spaltensummen von 0 hat. Es ist aber, wie bereits oben angedeutet, bevorzugt, dass sich Z eindeutig aus A ergibt und die Form von Z daher von A abhängt. Der Vorteil dieser Forderung für die Zeilensummen ist, dass es ein "Masterspektrum" gibt (z.B. $Q_1$), nämlich das durch die eine Zeile mit Zeilensumme ungleich Null erzeugte. Die anderen intermediären Spektren (z.B. $Q_2$ bis $Q_M$) repräsentieren bei Zeilensumme Null Differenzen, insbesondere zu $Q_1$. In einem Fall, in dem A eine N x N Matrix ist und alle $P_i$ gleich wären, dann wären bei dieser Eigenschaft $Q_2$ bis $Q_N = 0$. Bei reinen Wasserobjekten wäre in der CT (bis auf Rauschen) diese Situation gegeben. Damit würden $Q_2$ bis $Q_M$ die Abweichungen zu Wasser repräsentieren und wären im Sinne einer Materialzerlegung recht anschaulich interpretierbar.

Gemäß einem bevorzugten Verfahren werden die Komponenten des rücktransformierten Vektors P' im Rahmen einer Bildrekonstruktion zu Bildern rekonstruiert und bevorzugt nach oder im Rahmen dieser Bildrekonstruktion CT-Bilder CT(E) für unterschiedlichen Energien E unter der Nutzung der Formel $CT(E) = \sum \mu_i(E) L_i(rP'_i)$ mit dem energieabhängigen Koeffizienten $\mu$, einem rekonstruierten Bild $rP'_i$ aus der i-ten Komponente des Vektors P' und den Linienintegralen $L_i$ erzeugt werden.

Hierzu sollte beachtet werden, dass in der Praxis zwei Möglichkeiten bevorzugt werden: Es können Materialdichten rekonstruiert werden, die erst im Bildraum zu lokalen monochromatischen Absorptionswerten kombiniert werden. Alternativ könne zuerst monochromatische Linieninterale erzeugt werden, die nach Rekonstruktion direkt die lokalen monochromatischen Schwächungen darstellen. Bis auf nicht-lineare Optimierung während der Rekonstruktion ist das aus mathematischer Sicht identisch, da die inverse Radontransformation (als grundlegende CT-Rekonstruktion) ein linearer Operator ist. Welche Variante in der Praxis interessanter ist, hängt davon ab, ob die finalen Daten im Bildraum eher Basismaterialbilder oder Bilder verschiedener Energien sein sollen.

Bevorzugt liegen Komponenten der Erfindung als ein "Cloud-Dienst" vor. Ein solcher Cloud-Dienst dient der Bearbeitung von Daten, insbesondere mittels einer künstlichen Intelligenz, kann aber auch ein Dienst basierend auf herkömmlichen Algorithmen sein oder ein Dienst, bei dem im Hintergrund eine Auswertung durch Menschen stattfindet. Generell ist ein Cloud-Dienst (im Folgenden auch kurz als "Cloud" bezeichnet) eine IT-Infrastruktur, bei der über ein Netzwerk z.B. Speicherplatz oder Rechenleistung und/oder eine Anwendungssoftware zur Verfügung gestellt wird. Die Kommunikation zwischen dem Anwender und der Cloud erfolgt dabei mittels Datenschnittstellen und/oder Datenübertragungsprotokollen. Im hier vorliegenden Fall ist besonders bevorzugt, dass der Cloud-Dienst sowohl Rechenleistung als auch Anwendungssoftware zur Verfügung stellt.

Im Rahmen eines bevorzugten Verfahrens erfolgt eine Bereitstellung von Daten über das Netzwerk an den Cloud-Dienst. Dieser umfasst ein Rechensystem, z.B. einen Computercluster, das in der Regel nicht den lokalen Rechner des Benutzers umfasst. Diese Cloud kann insbesondere durch die medizinische Einrichtung, die auch die medizintechnischen Systeme bereitstellt, zur Verfügung gestellt werden. Beispielsweise werden die Daten einer Bildaufnahme über ein RIS (Radiologieinformationssystem) oder PACS an ein (Remote-) Rechnersystem (die Cloud) gesendet. Bevorzugt stellen das Rechensystem der Cloud, das Netzwerk sowie das medizintechnische System einen Verbund im datentechnischen Sinne dar. Das Verfahren kann dabei mittels einer Befehls-konstellation in dem Netzwerk realisiert werden. Die in der Cloud berechneten Daten ("Ergebnisdaten") werden später wieder über das Netzwerk zu dem lokalen Rechner des Anwenders gesendet.

Die Erfindung ermöglicht eine auf einem Basismaterial-Modell basierende Strahlaufhärtungskorrektur ohne einen Anstieg des Rauschens bzw. die Einführung statistischer Artefakte. Diese ist ein erheblicher Vorteil gegenüber den Verfahren nach dem Stand der Technik. Das Verhindern des Anstiegs des Rauschens spielt eine wesentliche Rolle für die klinische Anwendung. Insbesondere für zukünftige Anwendungen mit mehr als zwei Spektren im Falle exotischer Kontrastmittel ist eine effektive Rauschunterdrückung essenziell.

Die exakte Strahlaufhärtungskorrektur verbessert die Qualität von Basismaterialzerlegungen und monoenergetischen Daten gegenüber Verfahren nach dem Stand der Technik, die auf einem linearisierten Basismaterialmodell basieren.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:

Figur 1 eine grob schematische Darstellung eines Computertomographiesystems mit einem Ausführungsbeispiel einer Steuereinrichtung mit einer erfindungsgemäßen Vorrichtung zur Durchführung des Verfahrens,

Figur 2 eine Darstellung eines Verfahrens zur Basismaterialzerlegung und einer Korrektur von Strahlaufhärtungsartefakten nach dem Stand der Technik,

Figur 3 ein Beispiel für ein erfindungsgemäßes System,

Figur 4 eine schematische Darstellung des erfindungsgemäßen Verfahrens,

Figur 5 ein Beispiel für einen möglichen Ablauf einer bevorzugten Variante eines erfindungsgemäßen Verfahrens,

Figur 6 ein Beispiel für einen möglichen Ablauf einer bevorzugten Variante eines erfindungsgemäßen Verfahrens,

Figur 7 ein Beispiel für einen möglichen Ablauf einer bevorzugten Variante eines erfindungsgemäßen Verfahrens.

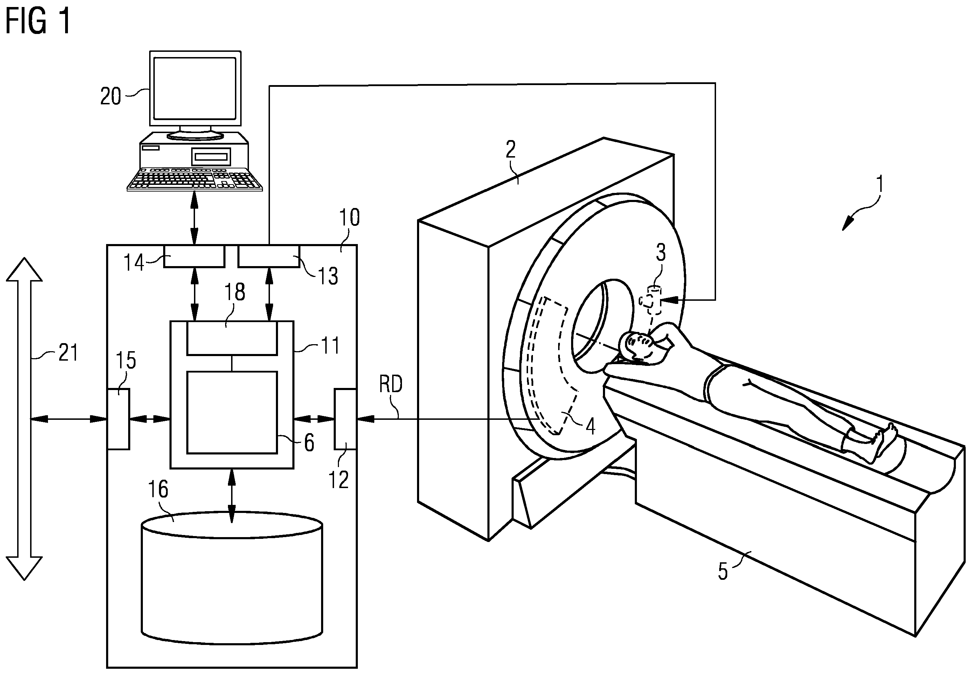

Figur 1 zeigt grob schematisch ein Computertomographiesystem 1 mit einer Steuereinrichtung 10 zur Durchführung des erfindungsgemäßen Verfahrens. Das Computertomographiesystem 1 weist in üblicher Weise einen Scanner 2 mit einer Gantry auf, in der eine Röntgenquelle 3 rotiert, die jeweils einen Patienten durchstrahlt, welcher mittels einer Liege 5 in einen Messraum der Gantry hineingeschoben wird, so dass die Strahlung auf einen der Röntgenquelle 3 jeweils gegenüberliegenden Detektor 4 trifft. Es wird ausdrücklich darauf hingewiesen, dass es sich bei dem Ausführungsbeispiel gemäß dieser Figur nur um ein Beispiel eines CTs handelt und die Erfindung auch an beliebigen CT-Konstruktionen, beispielsweise mit ringförmigem feststehendem Röntgendetektor und/oder mehreren Röntgenquellen genutzt werden kann.

Ebenso sind bei der Steuereinrichtung 10 nur die Komponenten dargestellt, die für die Einordnung der Erfindung in das CT-System wesentlich sind (s. dazu auch Figur 3). Grundsätzlich sind CT-Systeme und zugehörige Steuereinrichtungen dem Fachmann bekannt und brauchen daher nicht im Detail erläutert zu werden.

Eine Kernkomponente der Steuereinrichtung 10 ist hier ein Prozessor 11, auf dem verschiedene Komponenten in Form von Softwaremodulen realisiert sind. Die Steuereinrichtung 10 weist weiterhin eine Terminalschnittstelle 14 auf, an die ein Terminal 20 angeschlossen ist, über das ein Bediener die Steuereinrichtung 10 und somit das Computertomographiesystem 1 bedienen kann. Eine weitere Schnittstelle 15 ist eine Netzwerkschnittstelle zum Anschluss an einen Datenbus 21, um so eine Verbindung zu einem RIS (Radiologieinformationssystem) bzw. PACS (Picture Archiving and Communication System = Bildarchivierungs- und Kommunikationssystem) herzustellen.

Über eine Steuerschnittstelle 13 kann von der Steuereinrichtung 10 der Scanner 2 angesteuert werden, d. h. es werden z.B. die Rotationsgeschwindigkeit der Gantry, die Verschiebung der Patientenliege 5 und die Röntgenquelle 3 selbst gesteuert. Über eine Akquisitionsschnittstelle 12 werden die Rohdaten RD aus dem Detektor 4 ausgelesen. Weiterhin weist die Steuereinrichtung 10 eine Speichereinheit 16 auf, in der u. a. verschiedene Messprotokolle hinterlegt sind.

Als eine Softwarekomponente ist auf dem Prozessor 11 eine Bilddaten-Rekonstruktionseinheit 18 implementiert, mit welcher aus den über die Datenakquisitions-Schnittstelle 12 erhaltenen und das System 6 vorverarbeiteten Rohdaten RD die gewünschten Bilddaten rekonstruiert werden.

Das System 6 und seine Arbeitsweise wird im Folgenden genauer beschrieben.

Figur 2 zeigt ein Verfahren zur Basismaterialzerlegung und einer Korrektur von Strahlaufhärtungsartefakten nach dem Stand der Technik. Die Rohdaten RD umfassen eine Mehrzahl von (noch nicht rekonstruierten) Bildaufnahmen bei einer Mehrzahl an Energien, die hier mit den Vektorkomponenten $P_i$ gleichgesetzt werden können. Diese Bildaufnahmen werden mittels mehrerer Rekonstruktionseinheiten G1, G2, G3 der Bildrekonstruktionseinheit 18 zu Bildern rekonstruiert. Es wird dabei für jede Vektorkomponente eine Rekonstruktionseinheit G1, G2, G3 verwendet. Mittels der Linienintegrale L1, L2, L3 der Basismaterialanteile werden die Rekonstruierten Rohdaten als Funktion der Materialanteile angegeben. Wegen der strengen Monotonie in allen Komponenten kann die Abbildung von $R^N \rightarrow R^N$ invertiert werden, so dass $L_n = G_n (P_1,...,P_N)$ für $n = 1,...,N$ bestimmbar ist. Die Rekonstruktion der $L_n$-Rohdaten, z.B. durch gefilterte Rückprojektion, ergibt dann ein CT-Bild, das die lokalen Materialanteile des i-ten Basismaterials darstellt. Die CT-Rekonstruktion der $L_n$-Daten ergibt die räumliche Verteilung des n-ten Basismaterials, eine sog. Basismaterialzerlegung.

Obwohl mit diesem Ansatz eine Basismaterialzerlegung exakt formuliert werden kann, führt diese jedoch zu einer Rauschverstärkung, insbesondere wenn große Anteile von nicht-wasserähnlichen Materialien vorhanden sind. In der klinischen CT betrifft dies Knochen, Metalle oder eine hohe Anreicherung von Kontrastmitteln.

Figur 3 zeigt ein Beispiel für ein erfindungsgemäßes System 6 zur Vorverarbeitung einer Mehrzahl von simultan aufgenommenen CT-Aufnahmen bei unterschiedlichen Aufnahme-Energien mit einem Verfahren gemäß der vorangehenden Ansprüche. Das System ist hier grob schematisch dargestellt, wobei Kästen die funktionalen Einheiten verkörpern. Von links werden Rohdaten RD in das System eingegeben. Das Zeichen "$P_1$" soll dabei andeuten, dass die einzelnen Datensätze der Rohdaten RD, die bei den verschiedenen Aufnahme-Energien, d.h. in verschiedenen spektralen Kanälen, aufgenommen worden sind, im Grunde die späteren Vektoreinträge des Vektors P bilden. Das System umfasst die folgenden Komponenten:
Eine Vektoreinheit 61, die zum Bilden eines Vektors P mit den Rohdaten RD der CT-Aufnahmen bei jeweils einer Energie pro Vektorkomponente ausgelegt ist, so dass die Dimension des Vektors P der Anzahl N von aufgenommenen Energien entspricht. Dies können alle Energien sein, aber theoretisch auch weniger.

Eine Matrixeinheit 62, die in diesem Beispiel zum Bestimmen einer N x N Matrix A ausgelegt ist. Diese Matrix kann in einem einfachen Falle in ihr gespeichert sein, es können aber auch mehrere Matrizen gespeichert sein und für eine bestimmte Untersuchung jeweils eine passende Matrix ausgewählt werden.

Eine Transformationseinheit 63, die zum Erzeugen eines transformierten Vektors $Q = A \cdot P$ durch Multiplikation des Vektors P mit der Matrix A ausgelegt ist. Diese Einheit und nachfolgende Einheiten können insbesondere durch Softwaremodule auf einer Recheneinheit realisiert sein.

Eine Bearbeitungseinheit 64, die zum Bearbeiten der Daten des transformierten Vektors Q mit einer Bearbeitungsfunktion B, und zur Bildung des bearbeiteten transformierten Vektors Q' = B(Q) ausgelegt ist.

Eine Rücktransformationseinheit 65, die zum Bilden des rück-transformierten Vektors $P' = Z \cdot Q'$ aus der (in diesem Beispiel) N x N Matrix Z und dem bearbeiteten transformierten Vektor Q' = B(Q) ausgelegt ist.

Eine Ausgabeeinheit 66, die zum Ausgeben oder Weiterverarbeitung des rücktransformierten Vektors P' mit den vorverarbeiteten Rohdaten RD' ausgelegt ist.

Figur 4 zeigt eine schematische Darstellung des erfindungsgemäßen Verfahrens zur Vorverarbeitung einer Mehrzahl von simultan aufgenommenen CT-Aufnahmen, welche bei einer Mehrzahl an (Aufnahme-) Energien, d.h. in verschiedenen spektralen Kanälen, aufgenommen wurden.

In Schritt I wird ein Vektor P aus den Rohdaten RD der CT-Aufnahmen bei jeweils einer Energie pro Vektorkomponente $P_i$ gebildet. In diesem Beispiel wurden drei Sätze von Rohdaten RD bei drei unterschiedlichen Energien aufgenommen. Die Vektorkomponente $P_1$ soll hier die Rohdaten RD der Aufnahme bei der geringsten Energie enthalten, die Vektorkomponente $P_2$ die Rohdaten RD bei einer mittleren Energie und die Vektorkomponente $P_3$ die Rohdaten RD bei der höchsten Energie. Die Dimension des Vektors P ist also N = 3.

In Schritt II wird eine N x N Matrix A bestimmt. Diese Matrix hat in diesem Beispiel in ihrer ersten Zeile auf der Hauptdiagonalen eine Eins und ansonsten Nullen. Die übrigen Zeilen können im Grunde beliebig gewählt werden, wobei jedoch später in dem Vektor Q alle Informationen der Rohdaten RD enthalten sein sollten. Auch wenn A theoretisch auch die Identität sein könnte, entfaltet das Verfahren seine beste Wirkung, wenn A ungleich der Identität ist.

In Schritt III wird ein transformierter Vektor $Q = A \cdot P$ durch Multiplikation des Vektors P mit der Matrix A erzeugt. Durch die besondere Form der Matrix gilt in diesem Beispiel: $Q_1 = P_1$, es ist also derjenige Datensatz der Rohdaten RD, der bei der geringsten Energie aufgenommen worden ist.

In Schritt IV werden die Komponenten des transformierten Vektors Q mit einer Bearbeitungsfunktion B bearbeitet und dabei der bearbeitete transformierte Vektor Q' = B(Q) gebildet. Diese Bearbeitung kann z.B. eine Entrauschung sein.

In Schritt V wird der rücktransformierte Vektor P' = Z · Q' aus der N x N Matrix Z und dem bearbeiteten transformierten Vektor Q' = B(Q) gebildet. In diesem Beispiel ist Z genau die invertierte Matrix $A^{-1}$. Dadurch enthalten die Komponenten des rücktransformierten Vektors P' die Datensätze der (nun vorverarbeiteten) Rohdaten RD' bei den unterschiedlichen Energien (jede Komponente entspricht einer anderen Energie). Es kann hier sogar der Fall vorliegen, dass $P'_1 = P_1$, zumindest wenn dieser Wert selber nicht bearbeitet wurde, sondern als Vergleichswert für andere Bearbeitungen verwendet wurde, z.B. bei einer strukturerhaltenden Entrauschung.

In Schritt VI wird der rücktransformierte Vektor P' enthaltend die vorverarbeiteten Rohdaten RD' ausgegeben, z.B. für eine Weiterverarbeitung nach Figur 2.

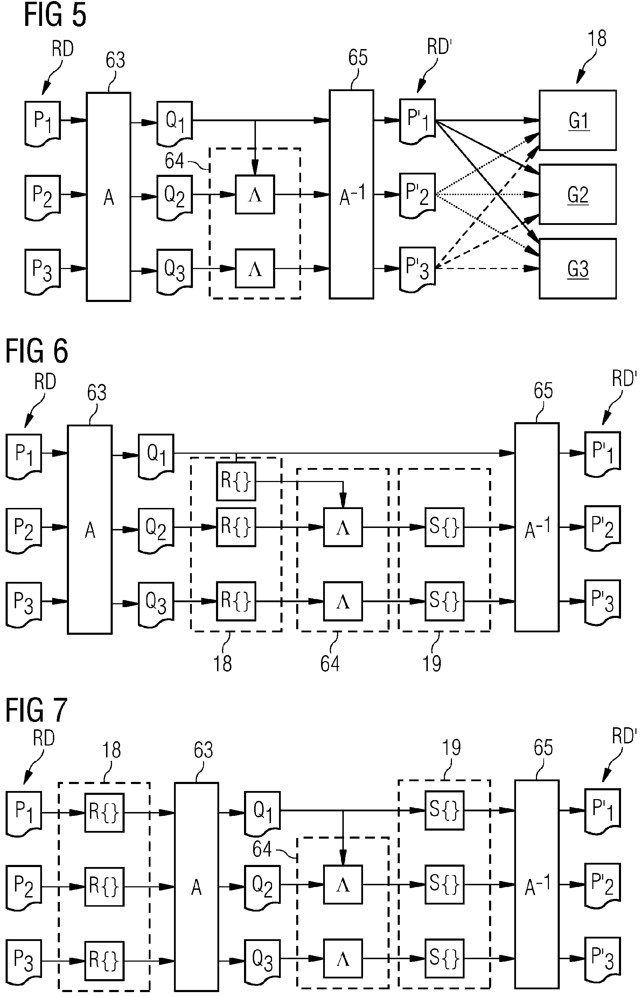

Figur 5 zeigt ein Beispiel für einen möglichen Ablauf einer bevorzugten Variante eines erfindungsgemäßen Verfahrens. Von links nach rechts werden die Rohdaten RD in Form eines Vektors P mittels einer Transformationseinheit 63, durch eine Matrixmultiplikation mit der Matrix A, in einen transformierter Vektor Q umgewandelt. In einer Bearbeitungseinheit 64 wird der transformierte Vektor Q mittels der Entrauschungsfunktion A entrauscht, wobei hier eine strukturerhaltende Entrauschung mit der Komponente $Q_1$ als Vergleichskomponente durchgeführt wird. die Ergebnisse dieser Entrauschung (also im Grunde der bearbeitete transformierte Vektor Q') werden in der Rücktransformationseinheit 65 zum rücktransformierten Vektor P' rücktransformiert. Dies geschieht hier mittels Multiplikation von Q' mit der inversen Matrix von A.

Es werden dann rechts die Komponenten des rücktransformierten Vektors P' ausgegeben und mit den Rekonstruktionseinheiten G1, G2, G3 Bilder rekonstruiert und möglicherweise Materialkomponenten rekonstruiert.

Figur 6 zeigt ein Beispiel für einen möglichen Ablauf einer bevorzugten Variante eines erfindungsgemäßen Verfahrens. Dieser Ablauf basiert auf dem in Figur 5 dargestellten mit dem Unterschied, dass die Bearbeitung des transformierten Vektors Q nicht im Raum der Rohdaten RD erfolgt, sondern mittels Rekonstruktionsroutinen (hier mit R{} markiert) einer Bildrekonstruktionseinheit 18 die Komponenten $Q_i$ des transformierten Vektors Q zunächst Bilder rekonstruiert werden, diese mit der Bearbeitungseinheit 64 mittels der Entrauschungsfunktion A entrauscht werden und dann die entrauschten Bilder wieder mit der Rück-Rekonstruktionseinheit 19 in den Raum der Rohdaten RD rücktransformiert werden (hier mit S{} markiert).

Auch in diesem Beispiel dient die Komponente $Q_1$ als Vergleichswert und wird nicht entrauscht. Sie muss also nicht unbedingt rücktransformiert werden, da sie einfach so "durchgeschleift" werden kann. Nur eine Rekonstruktion in den Bildraum ist notwendig, da die Entrauschung ja in diesem stattfindet.

Figur 7 zeigt ein Beispiel für einen möglichen Ablauf einer bevorzugten Variante eines erfindungsgemäßen Verfahrens. Diese ähnelt Figur 6 mit dem Unterschied, dass die Bildrekonstruktion bereits vor der Eingabe des Vektors P in die Transformationseinheit 63 erfolgt. Hier müsste im Unterschied zu Figur 6 auch die Komponente $Q_1$ wieder rück-rekonstruiert werden, was jedoch ganz von der Art der Matrix A und Z abhängt.

Es wird abschließend noch einmal darauf hingewiesen, dass es sich bei den vorhergehend detailliert beschriebenen Verfahren sowie bei dem dargestellten Computertomographiesystem 1 lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Modul" nicht aus, dass die betreffenden Komponenten aus mehreren zusammenwirkenden Teil-Komponenten bestehen, die ggf. auch räumlich verteilt sein können. Der Ausdruck "eine Anzahl" ist als "mindestens eins" zu verstehen.

**Patentansprüche**

1. Computerimplementiertes Verfahren zur Vorverarbeitung einer Mehrzahl von simultan aufgenommenen CT-Aufnahmen mit Rohdaten (RD), die bei unterschiedlichen Aufnahme-Energien aufgenommen worden sind, das Verfahren umfassend die Schritte:

   - Bilden eines Vektors P mit den Rohdaten (RD) der CT-Aufnahmen bei jeweils einer Energie pro Vektorkomponente, so dass die Dimension des Vektors P einer Anzahl N von aufgenommenen Energien entspricht,
   - Bestimmen einer N x M Matrix A,
   - Erzeugen eines transformierten Vektors Q = A · P durch Multiplikation des Vektors P mit der Matrix A,
   - Bearbeiten der Komponenten des transformierten Vektors Q mit einer Bearbeitungsfunktion B, und Bildung des bearbeiteten transformierten Vektors Q' = B(Q), wobei die Bearbeitung der Komponenten des transformierten Vektors Q ein Entrauschen ist und die Bearbeitungsfunktion B das Entrauschen der Komponenten des transformierten Vektors Q bewirkt,
   - Bilden des rücktransformierten Vektors P' = Z · Q' aus der M x O Matrix Z und dem bearbeiteten transformierten Vektor Q' = B(Q), wobei die Matrix A invertierbar ist und der rücktransformierte Vektor P' = $A^{-1}$ · Q' aus der inversen Matrix von A als Matrix Z und dem bearbeiteten transformierten Vektor Q' = B(Q) gebildet wird,
- Ausgeben oder Weiterverarbeiten des rück-transformierten Vektors P',
**dadurch gekennzeichnet, dass**
- die erste Komponente des Vektors P als Vergleichswert für die Bearbeitung ausgewählt wird und die Matrix A so bestimmt wird, dass in der Zeile, die bei der Transformation auf diese Komponente wirkt, der Matrixkoeffizient auf der Hauptdiagonalen den Wert 1 hat und alle anderen Matrixkoeffizienten der Zeile den Wert 0 haben, wobei die Matrix A in N-1 Zeilen die Zeilensummen von 0 hat, und
- bei dem Entrauschen der Komponenten des transformierten Vektors Q eine strukturerhaltende Rauschreduktion durchgeführt wird, bei der die erste Komponente $Q_1$ des transformierten Vektors Q als Führungsinstanz für eine geometrische Synchronisation verwendet wird, wobei die anderen Komponenten $Q_2$ bis $Q_N$ des transformierten Vektors Q Differenzen zu der ersten Komponente $Q_1$ des transformierten Vektors Q bei anderen intermediären Spektren als dem Masterspektrum der ersten Komponente $Q_1$ des transformierten Vektors Q repräsentieren.

2. Verfahren nach Anspruch 1, wobei der rücktransformierte Vektor P' in einem nachfolgenden Schritt zur Ermittlung von Ergebnissen aus den Rohdaten (RD) verwendet wird, bevorzugt zur Ermittlung von

- Basismaterial-Daten und/oder
- monochromatischen Daten und/oder
- Elektronendichte und/oder
- Kernladung und/oder
- Anteile von Absorptionseffekten, insbesondere Compton-Effekt oder photoelektrischer Effekt.

3. Verfahren nach einem der vorangehenden Ansprüche, wobei vor der Bearbeitung der Komponenten des transformierten Vektors Q CT-Bilder rekonstruiert werden, diese CT-Bilder mit der Bearbeitungsfunktion B bearbeitet werden und die bearbeiteten CT-Bilder bevorzugt wieder zu Rohdaten (RB') rück-rekonstruiert werden.

4. Verfahren nach Anspruch 3, wobei

- die Rekonstruktion von CT-Bildern vor der Bildung des transformierten Vektors Q erfolgt und die Rück-Rekonstruktion der CT-Bilder nach der Bildung des rücktransformierten Vektors P' erfolgt,
- die Rekonstruktion von CT-Bildern nach der Bildung des transformierten Vektors Q erfolgt und die Rück-Rekonstruktion der CT-Bilder nach der Bildung des rücktransformierten Vektors P' erfolgt,
- die Rekonstruktion von CT-Bildern nach der Bildung des transformierten Vektors Q erfolgt und die Rück-Rekonstruktion der CT-Bilder vor der Bildung des rücktransformierten Vektors P' erfolgt, oder
- die Rekonstruktion von CT-Bildern vor der Bildung des transformierten Vektors Q erfolgt und die Rück-Rekonstruktion der CT-Bilder vor der Bildung des rücktransformierten Vektors P' erfolgt.

5. Verfahren nach einem der vorangehenden Ansprüche, wobei die Matrix Z in N-1 Spalten die Spaltensummen von 0 hat.

6. Verfahren nach einem der vorangehenden Ansprüche, wobei die Komponenten des rücktransformierten Vektors P' im Rahmen einer Bildrekonstruktion zu Bildern rekonstruiert werden und bevorzugt nach oder im Rahmen dieser Bildrekonstruktion CT-Bilder CT(E) für unterschiedliche Energien E unter der Nutzung der Formel $CT(E) = \sum \mu_i(E)L_i(rP'_i)$ mit dem energieabhängigen Koeffizienten $\mu_i$, einem rekonstruierten Bild $rP'_i$ aus der i-ten Komponente des Vektors P' und den Linienintegralen $L_i$ erzeugt werden.

7. System (6) zur Vorverarbeitung einer Mehrzahl von simultan aufgenommenen CT-Aufnahmen mit Rohdaten (RD), die bei unterschiedlichen Aufnahme-Energien aufgenommen worden sind, umfassend Mittel zur Ausführung eines Verfahrens gemäß der vorangehenden Ansprüche, sowie umfassend:

- eine Vektoreinheit (61) ausgelegt zum Bilden eines Vektors P mit den Rohdaten (RD) der CT-Aufnahmen bei jeweils einer Energie pro Vektorkomponente, so dass die Dimension des Vektors P der Anzahl N von aufgenommenen Energien entspricht,
- eine Matrixeinheit (62) ausgelegt zum Bestimmen einer N x M Matrix A,
- eine Transformationseinheit (63) ausgelegt zum Erzeugen eines transformierten Vektors Q = A · P durch Multiplikation des Vektors P mit der Matrix A,
- eine Bearbeitungseinheit (64) ausgelegt zum Bearbeiten der Komponenten des transformierten Vektors Q mit einer Bearbeitungsfunktion B, und Bildung des bearbeiteten transformierten Vektors Q' = B(Q),
- eine Rücktransformationseinheit (65) ausgelegt zum Bilden des rücktransformierten Vektors P' = Z · Q' aus der M x O Matrix Z und dem bearbeiteten transformierten Vektor Q' = B(Q),
- eine Ausgabeeinheit (66) ausgelegt zum Ausgeben oder Weiterverarbeiten des rücktransformierten Vektors P'.

8. Steuereinrichtung (10) umfassend ein System (6) nach Anspruch 7.

9. Computertomographiesystem (1) umfassend eine Steuereinrichtung (10) nach Anspruch 8.

10. Computerprogrammprodukt, umfassend Befehle, die bei der Ausführung des Programms durch einen Computer diesen veranlassen, die Schritte des Verfahrens nach Anspruch 1 bis 6 auszuführen.

11. Computerlesbares Speichermedium, umfassend Befehle, die bei der Ausführung durch einen Computer diesen veranlassen, die Schritte des Verfahrens nach Anspruch 1 bis 6 auszuführen.

**Claims**

1. Computer-implemented method for pre-processing a plurality of simultaneously recorded CT images with raw data (RD), which have been recorded with different recording energies, the method comprising the steps:

   - forming a vector P with the raw data (RD) of the CT images with in each case one energy per vector component so that the dimension of the vector P corresponds to a number N of recorded energies,
   - determining an N x M matrix A,
   - generating a transformed vector $Q = A \cdot P$ by multiplication of the vector P with the matrix A,
   - processing the components of the transformed vector Q with a processing function B, and forming the processed, transformed vector $Q' = B(Q)$, wherein the processing of the components of the transformed vector Q is a denoising and the processing function B causes the denoising of the components of the transformed vector Q,
   - forming the back-transformed vector $P' = Z \cdot Q'$ from the M x O matrix Z and the processed, transformed vector $Q' = B(Q)$, wherein the matrix A can be inverted and the back-transformed vector $P' = A^{-1} \cdot Q'$ is formed from the inverse matrix of A as matrix Z and the processed, transformed vector $Q' = B(Q)$,
   - outputting or further processing the back-transformed vector P',
   **characterised in that**
   - the first component of the vector P is selected as a comparison value for the processing and the matrix A is determined such that in the line which acts on this component during the transformation, the matrix coefficient on the main diagonal has the value 1, and all other matrix coefficients of the lines have the value 0, wherein the matrix A in N-1 lines has the line total of 0, and
   - during the denoising of the components of the transformed vector Q, a structure-containing noise reduction is carried out, in which the first component $Q_1$ of the transformed vector Q is used as a guide entity for a geometric synchronisation, wherein the other components $Q_2$ to $Q_N$ of the transformed vector Q represent differences with respect to the first component $Q_1$ of the transformed vector Q with other intermediary spectra from the master spectrum of the first component $Q_1$ of the transformed vector Q.

2. Method according to claim 1, wherein the back-transformed vector P' is used in a subsequent step to determine results from the raw data (RD), preferably to determine

   - base material data and/or
   - monochromatic data and/or
   - electron density and/or
   - nuclear charge and/or
   - portions of absorption effects, in particular Compton effect or photoelectric effect.

3. Method according to one of the preceding claims, wherein CT images are reconstructed before processing the components of the transformed vector Q, these CT images are processed with the processing function B and the processed CT images are preferably back-reconstructed again to form raw data (RB').

4. Method according to claim 3, wherein

   - the reconstruction of CT images takes place before the formation of the transformed vector Q and the back reconstruction of the CT images takes place after the formation of the back-transformed vector P',
   - the reconstruction of CT images takes place after the formation of the transformed vector Q and the back reconstruction of the CT images takes place after the formation of the back-transformed vector P',
   - the reconstruction of CT images takes place after the formation of the transformed vector Q and the back reconstruction of the CT images takes place before the formation of the back-transformed vector P', or
   - the reconstruction of CT images takes place before the formation of the transformed vector Q and the back-reconstruction of the CT images takes place before the formation of the back-transformed vector P'.

5. Method according to one of the preceding claims, wherein the matrix Z in N-1 column has the column sum of 0.

6. Method according to one of the preceding claims, wherein the components of the back-transformed vector P' are reconstructed within the scope of an image reconstruction to form images and CT images CT(E) are preferably generated after or within the scope of this image reconstruction for different energies E using the formula $CT(E)=\Sigma\mu_i(E)L_i(rP'_i)$ with the energy-dependent coefficient $\mu$, a reconstructed image $rP'_i$ from the i'th component of the vector P' and the line integrals $L_i$.

7. System (6) for preprocessing a plurality of simultaneously recorded CT recordings with raw data (RD), which have been recorded with different recording energies, comprising means for executing a method according to the preceding claims, and comprising:

   - a vector unit (61) designed to form a vector P with the raw data (RD) of the CT recordings with in each case one energy per vector component, so that the dimension of the vector P corresponds to the number N of recorded energies,
   - a matrix unit (62) designed to determine an N x M matrix A,
   - a transformation unit (63) designed to generate a transformed vector $Q = A \cdot P$ by multiplication of the vector P with the matrix A,
   - a processing unit (64) designed to process the components of the transformed vector Q with a processing function B and forming the processed transformed vector Q' = B(Q),
   - a back-transformation unit (65) designed to form the back-transformed vector $P' = Z \cdot Q'$ from the M x O matrix Z and the processed, transformed vector Q' = B(Q),
   - an output unit (66) designed to output or further process the back-transformed vector P'.

8. Control facility (10) comprising a system (6) according to claim 7.

9. Computed tomography system (1) comprising a control facility (10) according to claim 8.

10. Computer program product, comprising commands, which, upon execution of the program by a computer, trigger this to execute the steps of the method according to claim 1 to 6.

11. Computer-readable storage medium, comprising commands, which, upon execution by a computer, trigger this to execute the steps of the method according to claim 1 to 6.

**Revendications**

1. Procédé mis en œuvre par ordinateur de prétraitement d'une pluralité d'enregistrements de tomodensitométrie enregistrés simultanément par des données (RD) brutes, qui ont été enregistrées à des énergies d'enregistrement différentes, le procédé comprenant les stades :

   - formation d'un vecteur P par les données (RD) brutes des enregistrement de tomodensitométrie à respectivement une énergie par composant vectoriel, de manière à ce que la dimension du vecteur P corresponde à un nombre N d'énergies enregistrées,
   - détermination d'une matrice A, N x M,
   - production d'un vecteur $Q = A \cdot P$ transformé par multiplication du vecteur P par la matrice A,
   - traitement des composants du vecteur Q transformé par une fonction B de traitement et formation du vecteur Q'= B(Q) transformé traité, dans lequel le traitement des composants du vecteur Q transformé est un débruitage et la fonction B de traitement provoque le débruitage des composants du vecteur Q transformé,
   - formation du vecteur P'= $Z \cdot$ Q' retransformé, à partir de la matrice Z, M x O et du vecteur Q'= B(Q) transformé traité, dans lequel la matrice A est inversable et le vecteur P'= $A^{-1} \cdot$ Q' retransformé est formé à partir de la matrice inverse A, comme matrice Z, et du vecteur Q'= B(Q) transformé traité,
   - sortie ou continuation à traiter le vecteur P' retransformé, **caractérisé en ce que**
   - le premier composant du vecteur P est choisi comme valeur de comparaison pour le traitement et la matrice A est déterminée de manière à ce que dans la ligne, qui agit dans la transformation sur ce composant, le coefficient de la matrice sur la diagonale principale, ait à valeur 1 et tous les autres coefficients de la matrice de la ligne aient la valeur 0, la matrice A ayant, dans N-1 lignes, les sommes de lignes de 0, et
   - lors du débruitage des composants du vecteur Q transformé, est effectuée une réduction de bruit concernant la structure, dans laquelle le premier composant $Q_1$ du vecteur Q transformé est utilisé comme instance de guidage pour une synchronisation géométrique, dans lequel les autres composants $Q_2$ à $Q_N$ du vecteur Q transformé représentent des différences au premier composant $Q_1$ du vecteur Q transformé dans d'autres spectres intermédiaires que le spectre maître du premier composant $Q_1$ du vecteur Q transformé.

2. Procédé suivant la revendication 1, dans lequel on utilise le vecteur P' retransformé dans un stade ultérieur de détermination de résultat à partir des données (RD) brutes, de préférence pour la détermination de

    - des données de matériau de base et/ou
    - des données monochromatiques et/ou
    - une densité d'électrons et/ou
    - une charge de noyau et/ou
    - des proportions d'effets d'absorption, en particulier l'effet Compton ou l'effet photoélectrique.

3. Procédé suivant l'une des revendications précédentes, dans lequel, avant le traitement des composants du vecteur Q transformé, on reconstruit des images de tomodensitométrie, on traite ces images de tomodensitométrie par la fonction B de traitement et on rereconstruit les images de tomodensitométrie traitées, de préférence à nouveau en des données (RB') brutes.

4. Procédé suivant la revendication 3, dans lequel

    - la reconstruction d'image de tomodensitométrie a lieu avant la formation du vecteur Q transformé et la rereconstruction des images de tomodensitométrie a lieu après la formation du vecteur P' retransformé,
    - la reconstruction des images de tomodensitométrie a lieu après la formation du vecteur Q transformé et la rereconstruction des images de tomodensitométrie a lieu après la formation du vecteur P' retransformé,
    - la reconstruction d'image de tomodensitométrie a lieu après la formation du vecteur Q transformé et la rereconstruction des images de tomodensitométrie a lieu avant la formation du vecteur P' retransformé,
    - la reconstruction d'image de tomodensitométrie a lieu avant la formation du vecteur Q transformé et la rereconstruction des images de tomodensitométrie a lieu avant la formation du vecteur P' retransformé.

5. Procédé suivant l'une des revendications précédentes, dans lequel la matrice Z, dans N-1 colonnes, a les sommes de colonne de 0.

6. Procédé suivant l'une des revendications précédentes, dans lequel on reconstruit les composants du vecteur P' retransformé dans le cadre d'une reconstruction d'image en des images, et de préférence, après ou dans le cadre de cette reconstruction d'image, on produit des images de tomodensitométrie CT(E) pour des énergies E différentes, en utilisant la formule $CT(E) = \sum \mu_i(E)L_i(rP'_i)$ avec le coefficient $\mu$, qui dépend de l'énergie, une image $rP'_i$ reconstruite à partir du ième composant du vecteur P' et des intégrales $L_i$ de lignes.

7. Système (6) de prétraitement d'une pluralité d'enregistrements de tomodensitométrie enregistrés simultanément par des données (RD) brutes, qui ont été enregistrées à des énergies d'enregistrement différentes, comprenant des moyens pour effectuer un procédé suivant l'une des revendications précédentes, ainsi que comprenant :

    - une unité (61) de vecteur conçue pour former un vecteur P par les données (RD) brutes des enregistrements de tomodensitométrie pour respectivement une énergie par composant de vecteur, de manière à ce que la dimension du vecteur P corresponde au nombre N des énergies enregistrées,
    - une unité (62) de matrice conçue pour la détermination d'une matrice A, N x M,
    - une unité (63) de transformation conçue pour la production d'un vecteur Q = A · P transformé par multiplication du vecteur P par la matrice A,
    - une unité (64) de traitement conçue pour traiter les composants du vecteur Q transformé par une fonction B de traitement, et formation du vecteur Q'= B(Q) transformé traité,
    - une unité (65) de retransformation conçue pour former le vecteur P' = Z · Q' retransformé à partir de la matrice Z, M x O et du vecteur Q'= B(Q) transformé traité,
    - une unité (66) de sortie conçue pour sortir ou traiter ultérieurement le vecteur P' retransformé.

8. Dispositif (10) de commande comprenant un système (6) suivant la revendication 7.

9. Système (1) de tomodensitométrie assistée par ordinateur comprenant un dispositif (10) de commande suivant la revendication 8.

10. Produit de programme d'ordinateur comprenant des instructions qui, lors de l'exécution du programme par ordinateur, font que celles-ci exécutent les stades du procédé suivant la revendication 1 à 6.

11. Support de mémoire, déchiffrable par ordinateur, comprenant des instructions qui, lors de l'exécution par un ordinateur, font que celles-ci exécutent les stades du procédé suivant la revendication 1 à 6.

FIG 1

EP 4 343 703 B1

# FIG 2 Stand der Technik

# FIG 3

# FIG 4

FIG 5

FIG 6

FIG 7

**EP 4 343 703 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20210012463 A1